# EUROPÄISCHE PATENTSCHRIFT

(11) **EP 2 163 415 B1**
(45) Veröffentlichungstag und Bekanntmachung des Hinweises auf die Patenterteilung: **23.03.2016**
(21) Anmeldenummer: 09011433.1
(22) Anmeldetag: 07.09.2009
(51) Int. Cl.: B60H 1/00, B60H 1/32, B60P 3/20, B62D 33/067

(54) **Transportkältemaschine für Kühlfahrzeuge mit mindestens einem Verflüssiger**
Transport refrigeration device for refrigerated vehicles with at least a condenser
Dispositif de réfrigération de transport pour des véhicules frigorifiques avec au moins un condensateur

(30) Priorität: 12.09.2008 DE 102008047224
(43) Veröffentlichungstag der Anmeldung: 17.03.2010
(73) Patentinhaber: FRIGOBLOCK Grosskopf GmbH, 45356 Essen (DE)
(72) Erfinder: Großkopf, Peter Volker, 45133 Essen (DE)
(74) Vertreter: Vomberg, Friedhelm

(56) Entgegenhaltungen:
- DE-A1- 3 227 381
- DE-A1- 19 641 636
- DE-C1- 10 223 712
- US-A- 3 163 995
- US-A- 4 109 485

## Beschreibung

Die vorliegende Erfindung betrifft eine Transportkältemaschine für Kühlfahrzeuge mit mindestens einem Verflüssiger. Derartige Transportkältemaschinen werden sowohl als Stimwandgeräte an Motorwagen, Aufliegem und Anhängem als auch bei Unter flurgeräten verwendet.

Aufgrund der sehr begrenzten Platzverhältnisse, die in Transportkälteanlagen für Kühlfahrzeuge herrschen, werden die Verflüssiger sehr klein dimensioniert. Dies gilt sowohl für Motorwagenkältemaschinen, die oberhalb des Fahrerhauses - auch wegen der immer höher werdenden Schlafkabinen - wenig Bauhöhe haben. Auch bei Auflieger- und Anhängerkältemaschinen ist an der Stirnwand lediglich ein extrem beengter Drehkreis vor dem isolierten Kühlaufbau als Bauraum für die Kältemaschine vorhanden. Ferner wird bei Unterflurkältemaschinen, die unter dem Kühlaufbau angebracht werden, der Raum bei immer größerer Laderauminnenhöhe und kleiner werdenden Räder zusehends geringer. Zu klein ausgeführte Verflüssiger haben hohe Verflüssigungsdrücke zur Folge, die wiederum zu einer Erhöhung des Energieverbrauchs, zu einer Verringerung der Kälteleistung, aber auch zu erhöhter Belastung und dementsprechend erhöhtem Verschleiß der Komponenten des Kältemittelkreislaufs führen.

Je nach Platzverhältnissen werden nach dem Stand der Technik die Verflüssiger von Motorwagenkältemaschinen entweder senkrecht oder aber schräg geneigt an der Front des Kältemaschinengehäuses angebracht Gegenüber dem senkrechten Einbau kann durch die Schrägstellung die Wärmeaustauscherfläche der Verflüssiger um 20 bis 30 % erhöht werden, ist aber aufgrund des beengten Bauraums in der Regel im Vergleich zu stationären Kälteanlagen im Verhältnis immer noch deutlich kleiner. Die geringen Wärmetauscherflächen und der geringe Luftdurchsatz sind die wesentlichen Gründe für die im Allgemeinen erheblich geringeren Kälteleistungszahlen von Transportkältemaschinen gegenüber stationären Kältemaschinen. Dies gilt insbesondere für den Betrieb im sog. Frischdienst mit Kühlraumtemperaturen um bzw. oberhalb von 0°C. In der Tiefkühlanwendung mit Kühlraumtemperaturen bei -20°C und darunter ist die Differenz der Kälteleistungszahlen (COP-Wert) gegenüber den stationären Kälteanlagen in der Regel geringer, weil prinzipbedingt mit sinkenden Temperaturen im Kühlaufbau die Kälteleistung der Transportkältemaschinen über-proportional abnimmt und damit auch die benötigte Verflüssigerleistung sinkt. Der Energieverbrauch einer Transportkältemaschine ist daher ca. doppelt so hoch wie der von stationären Anlagen. Hinzu kommt, dass die Transportkältemaschinen bei der Fahrt und häufig auch bei Stillstand mit unversteuertem Dieselkraftstoff betrieben werden können, so dass die Energiekosten deutlich höher sind als bei stationären Anlagen, die vom stationären Drehstromnetz mit im Verhältnis preiswerter Energie versorgt werden.

Als Kenngröße zur energetischen Bewertung einer Kältemaschine wird in der Regel die Kälteleistungszahl bzw. international der COP-Wert (Coefficient of Performance) verwendet, die als Verhältnis von nutzbarer Kälteleistung zu aufgenommener Antriebsleistung definiert sind.

Transportkälteanlagen der eingangs genannten Art sind unter anderem aus US 4,109,485 und DE 32 273 81 A1 bekannt. Um ein Abkippen der Fahrerkabine zu ermöglichen, ist nach US 4,109,485 vorgesehen, dass die Transportkälteanlage schwenkbar gelagert ist. Demgegenüber ist nach DE 32 27 381 A1 eine Ausführungsform vorgesehen, bei der das Kälteaggregat nach oben verschiebbar gelagert ist. Darüber hinaus wird in DE 196 41 636 ein Klimagerät beschrieben, das auf dem Dach eines Fahrzeugs, wie beispielsweise eines Busses, montiert werden kann.

Es ist Aufgabe der vorliegenden Erfindung die Kälteleistungszahl (COP-Wert) von Transportkältemaschinen zu erhöhen. Insbesondere soll die Lebensdauer und damit die Zuverlässigkeit von Transportkältemaschinen verbessert werden.

Diese Aufgabe wird durch die Transportkältemaschine nach Anspruch 1 gelöst, die mindestens einen Verflüssiger aufweist. Erfindungsgemäß ist vorgesehen, dass mindestens zwei Anströmflächen zum Verflüssiger vorhanden sind, die winklig zueinander angeordnet sind. Vorzugsweise können auch mehrere Verflüssiger vorgesehen sein, die jeweils eine Anströmfläche aufweisen, die wiederum winklig zueinander angeordnet sind. Dabei beträgt der Winkel α zwischen den Anstömflächen bevorzugt 90° bis 100°, wobei allerdings auch Winkel zwischen 45° und 130° realisierbar sind. Nach einer besonderen Ausführungsform ist vorgesehen, dass eine erste Anstömfläche im Wesentlichen senkrecht und/oder eine weitere Anstömfläche parallel zur Bewegungsrichtung angeordnet ist. In diesem Fall bilden die Anströmflächen einen Winkel α von ca. 90°.

Durch die vorstehenden Maßnahmen steht mit den verschiedenen Anströmflächen bzw. der Vielzahl von Verflüssigem somit nahezu die doppelte Wärmeaustauscherfläche zur Verfügung.

Wie nach dem Stand der Technik üblich, wird beim vorderen, in der Regel senkrecht gelagerten Verflüssiger die Luftansaugung von vorne gleichzeitig vom Fahrtwind unterstützt. Beim unteren, in der Regel waagerecht gelagerten Verflüssiger wird die Luftansaugung von unten zum einen durch den Staudruck an der Stirnwand des Kühlkoffers und zum anderen durch die natürliche Konvektion begünstigt, da die Luft durch die Erwärmung im Verflüssiger nach oben steigt, wodurch eine selbsttätige Luftströmung entsteht. In der Transportkältemaschine wird in der Regel die Luftströmung durch die Verflüssiger von einem oder mehreren Verflüssigergebläsen, die mechanisch, hydraulisch oder elektrisch über 24V DC oder 230/400V AC angetrieben werden können, unterstützt.

Aufgrund der wesentlich größeren Wärmeaustauschfläche der bzw. des Verflüssiger(s) ergeben sich ferner Vorteile in Bezug auf die Energieeffizienz und die Lebensdauer, da die Verflüssigungstemperatur absinkt, so dass sich deutliche Energieeinsparungen im Kältekreislauf und gleichzeitig auch deutlich höhere Kälteleistungen ergeben. Darüber hinaus sinkt der Verflüssigungsdruck, der das höchste Druckniveau im Kältemittelkreislauf darstellt, wodurch die Belastung der Bauteile wie z.B. des Kältemittelverdichters und des Diesel- bzw. Elektroantriebsmotors sinkt und demzufolge deren Lebensdauer und Zuverlässigkeit steigt.

Aufgrund der Erhöhung der luftseitigen Anströmfläche der Verflüssiger wird eine höhere Leistungsübertragung bei gleichen Luftgeschwindigkeiten durch die Verflüssigerwärmeaustauscher möglich. Bei gleicher Leistungsübertragung kann die Luftgeschwindigkeit und damit die Lüfterdrehzahl gesenkt werden. In diesem Fall führt ein geringerer Druckverlust an den Gebläsen überproportional zu erheblichen Energieeinsparungen. So zeigen modellhafte Gesetzmäßigkeiten, dass sich bei einer Halbierung der Luftgeschwindigkeit der Druckverlust auf 1/4tel und damit die Leistung des Gebläses auf 1/8tel reduzieren können.

Die Absenkung der Lüfterdrehzahl und der luftseitigen Druckverluste hat zudem den Vorteil, dass eine Geräuschminderung von bis zu 10dBA (ca. 90%) erreichbar ist Insbesondere bei Anlieferungen in Wohngebieten oder Mischgebieten stellt das geringere Geräuschniveau einen erheblichen Vorteil dar.

Erfindungsgemäß kann die hier beschriebene Transportkälteanlage mit einem Verflüssiger ausgestattet werden, der zwei Anströmflächen hat, von denen eine Anströmfläche senkrecht In Fahrtrichtung an der Front des Kältemaschinengehäuses und eine zweite Anströmfläche an der Unterseite Kältemaschinengehäuses angebracht wird. Ausführungsbedingt können auch zwei Verflüssiger in einem entsprechenden Winkel (> 45°, Im ausgeführten Fall ca. 95°) zueinander angeordnet werden. Der notwendige Bauraum nach einer konkreten Ausführungsform der Erfindung wird dadurch geschaffen, dass zum Abkippen des Fahrerhauses auch die darüber angebrachte Transportkältemaschine bei gelösten Schnellverschlossen mit Hilfe einer Kipphydraulik angekippt werden kann. Durch den so gewonnenen zusätzlichen Freiraum muss die Kontur der Transportkältemaschine nicht an den Kippradius des Fahrerhauses angepasst werden, wie dies bei Motorwagenkältemaschinen üblich ist, die dauerhaft und starr am Aufbau montiert sind. Dadurch steht auch im vorderen Bereich der Transportkältemaschine nahezu die komplette Bauhöhe zur Unterbringung der beiden Verflüssiger zur Verfügung.

Bei üblichen Motorwagenkälteanlagen kann eine Kipphydraulik nicht eingesetzt werden, da deren Verdampfer In den Kühlaufbau hineinragen und beim Kippen beschädigt würden. Die hier vorgestellte Transportkältemaschine zeichnet sich dadurch aus, dass die Verdampfer vollständig im Kältemaschinengehäuse integriert sind und nicht in den Kühlraum ragen.

Konkrete Ausgestaltungen der vorliegenden Erfindung werden im Folgenden anhand der Figuren beschrieben. Dabei zeigen
- Fig. 1: den vorderen Teil eines Kühlwagens und
- Fig. 2: einen Querschnitt einer Transportkältemaschine.

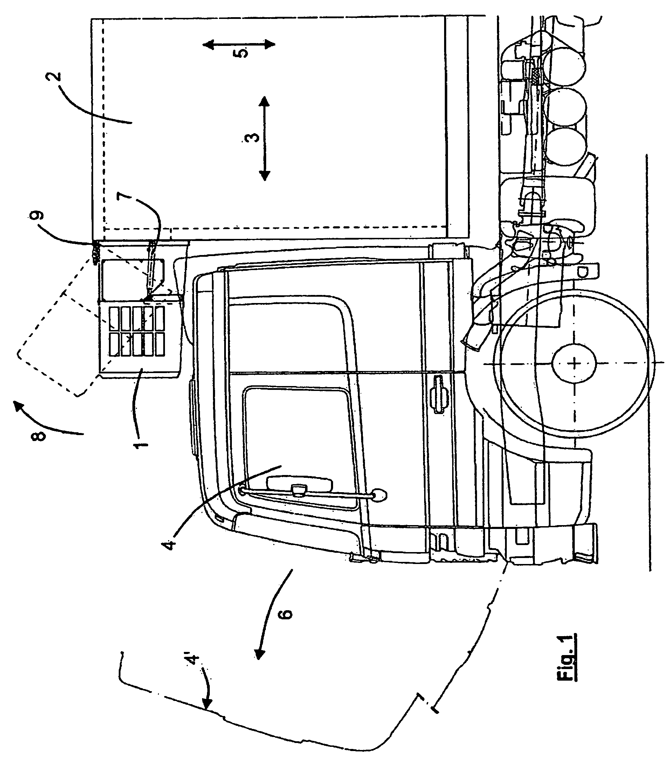

Bereits in der Beschreibungseinleitung wurde auf die begrenzten Platzverhältnisse eingegangen, die für die Installation von Transportkälteanlagen zur Verfügung stehen. Diese Problematik wird nochmals zur Verdeutlichung in Fig. 1 dargestellt, in der die typische Anordnung einer Motorwagenkältemaschine 1 dargestellt ist. Die geringen Platzverhältnisse sind zum einen dadurch bedingt, dass der Aufbau 2 mit einem durch Doppelpfeile 3 und 5 gekennzeichneten Laderaum eine gesetzlich vorgeschriebene maximale Höhe nicht überschreiten darf. Hinzu kommt, dass einerseits die Höhe des Aufbaus oft limitiert wird, damit das Fahrzeug bei der Zulieferung z.B. Toreinfahrten passieren kann oder aus Gründen der Energieeinsparung ein geringer Luftwiderstandsbeiwert angestrebt wird. Andererseits werden aus Gründen des Komforts für den Fahrer oft höhere Fahrerkabinen aufgebaut.

Es obliegt somit den Transportkühlmaschinenherstellem, den vorhandenen interessenslagen gerecht zu werden und Transportkühlmaschinen zu entwickeln, die kompakt sind und dabei effizient arbeiten. Dazu müssen die Transportkühlmaschinen an den einzig übrig bleibenden Platz oberhalb der Fahrerkabine 4 und vor dem Kühlraum 2 angepasst werden. Hinzu kommt, dass der vorhandene Platz dadurch beschränkt wird, dass die Fahrerkabine 4 in Pfeilrichtung 6 kippbar ausgestaltet sein muss, damit Reparaturen und Wartungen an dem Motor des Fahrzeugs durchgeführt werden können. Die Silhouette 4' zeigt die Frontpartie der Kabine 4 im gekippten Zustand.

Um den beschriebenen Raumbedingungen gerecht zu werden, ist nach einer konkreten Ausführungsform vorgesehen, dass die Transportkältemaschine 1 mittels Schnellverschlüssen am unteren Teil der Transportkältemaschine 1 an dem Kühlraum 2 befestigt ist. Der obere Teil der Transportkältemaschine 1 ist mittels einer Bolzenverbindung 9 drehbeweglich an dem Kühlraum 2 befestigt, so dass mittels eines Kippzylinders 7 die Transportkältemaschine 1 in Pfeilrichtung 8 kippbar ist.

Durch die Maßnahme wird weiterer Platz gewonnen, um die technisch notwendigen Bestandteile einer Transportkältemaschine 1 in einem Gehäuse unterzubringen.

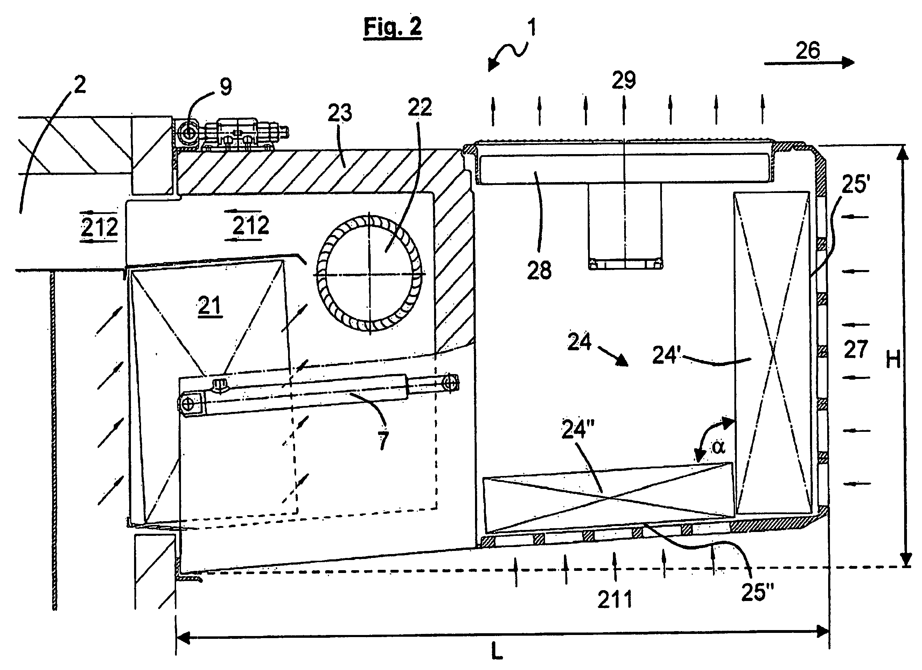

Eine konkrete Ausführungsform einer Transportkältemaschine 1 ist in Abbildung 2 dargestellt. Dadurch, dass die komplette Transportkältemaschine 1 kippbar ausgestaltet ist, sind alle Komponenten einschließlich Verdampfer 21 und Lüfter 22 in dem Gehäuse 23 der Transportkältemaschine 1 angeordnet, so dass diese nicht in den Kühlraum 2 hineinragen. An der Frontseite (rechts in Fig. 2) ist die Verflüssigereinheit 24 dargestellt, die im vorliegenden Fall zwei Verflüssiger 24', 24" aufweist. Die Verflüssiger 24', 24" schließen dabei einen Winkel α ein, der in diesem konkreten Ausführungsbeispiel 95° beträgt. Demzufolge sind auch Anströmflächen 25', 25" winkelig zueinander angeordnet.

Der Verflüssiger 24' ist im Wesentlichen senkrecht zur Fahrtrichtung 26 angeordnet, so dass der Fahrtwind (dargestellt durch die Pfeile 27) direkt die Leitungen (nicht näher dargestellt) des Verflüssigers umströmt.

Der Verflüssiger 24" ist Im Wesentlichen parallel zur Fahrtrichtung 26 aufgerichtet und im unteren Teil des Gehäuses 23 angeordnet. Aufgrund der Wärmeentwicklung innerhalb des Gehäuses 23 und aufgrund des Lüfters 28, der im oberen Teil des Gehäuses angeordnet Ist, entsteht ein Luftstrom 29, so dass die Leitungen (nicht näher dargestellt) des Verflüssigers 24" von einem Luststrom 211 umströmt wird.

Die in der Transportkältemaschine 1 erzeugte Kaltluft wird im linken Teil des Gehäuses entlang der Pfeilrichtung 212 in den Kühlraum 2 mit hoher Geschwindigkeit geleitet Durch die hohe Geschwindigkeitsenergie wird der Kaltluftstrom auch ohne Luftkanalführung bis zu 14 m zum Ende des Kohlaufbaus geworfen. Die komplette Transportkältemaschine ist in einem sehr kompakten Gehäuse 23 angeordnet, dass eine Länge L von ca. 900 mm bis 1000 mm und eine Höhe H von ca. 500 mm bis 600 mm aufweist.

## Patentansprüche

1. Transportkälteanlage für Kühlfahrzeuge mit mindestens einem Verflüssiger, **gekennzeichnet durch**
mindestens zwei winkelig zueinander angeordnete Anströmflächen einer Verflüssigereinheit (24).

2. Transportkälteanlage nach Anspruch 1, **gekennzeichnet durch** mehrere Verflüssiger (24', 24"), die jeweils eine Anströmfläche aufweisen.

3. Transportkälteanlage nach einem der Ansprüche 1 bis 2, **dadurch gekennzeichnet, dass** für einen Winkel α zwischen den Anströmflächen gilt: 45° ≤ α ≤ 130°, wobei der Winkel α vorzugsweise 80° bis 100° beträgt.

4. Transportkälteanlage nach einem der Ansprüche 1 bis 3, **dadurch gekennzeichnet, dass** eine erste Anströmfläche (25') im Wesentlichen senkrecht zur Bewegungsrichtung angeordnet ist.

5. Transportkälteanlage nach einem der Ansprüche 1 bis 4, **dadurch gekennzeichnet, dass** eine zweite Anströmfläche (25") im Wesentlichen parallel zur Bewegungsrichtung angeordnet ist, wobei die zweite Anströmfläche vorzugsweise an der Unterseite der Transportkälteanlage angeordnet ist.

6. Transportkälteanlage nach einem der Ansprüche 1 bis 4, **dadurch gekennzeichnet, dass** eine zweite Anströmfläche (25") im Wesentlichen parallel zur Bewegungsrichtung angeordnet ist, wobei die zweite Anströmfläche vorzugsweise an der Oberseite der Transportkälteanlage angeordnet ist.

7. Transportkälteanlage nach einem der Ansprüche 1 bis 6, **dadurch gekennzeichnet, dass** mindestens ein Verflüssiger (24) in einem oberhalb eines abkippbaren Fahrerkabine (4) eines Lastkraftwagens angeordneten Gehäuse integriert ist, das mittels Schnellverschlüssen fixiert und über eine Kipphydraulik (7) schwenkbar angeordnet ist.

## Claims

1. Transportation refrigeration unit for refrigeration trucks with at least one liquefier **characterised by** at least two airflow surfaces of a liquefying unit (24) arranged angular to each other.

2. Transportation refrigeration unit according to claim 1, **characterised by** several liquefiers (24', 24") each having an airflow surface.

3. Transportation refrigeration unit according to one of the claims 1 to 2 **characterised in that** the angle α between the airflow surfaces is 45° ≤ α ≤130°, whereby the angle α is preferably 80° to 100°.

4. Transportation refrigeration unit according to one of the claims 1 to 3 **characterised in that** the first airflow surface (25') is arranged substantially vertical to the movement direction.

5. Transportation refrigeration unit according to one of the claims 1 to 4 **characterised in that** the second airflow surface (25") is arranged substantially parallel to the movement direction, whereby the second airflow surface is arranged preferably at the underside of the transportation refrigeration unit.

6. Transportation refrigeration unit according to one of the claims 1 to 4 **characterised in that** the second airflow surface (25") is arranged substantially parallel to the movement direction, whereby the second airflow surface is arranged preferably at the top side of the transportation refrigeration unit.

7. Transportation refrigeration unit according to one of the claims 1 to 6 **characterized in that** at least one liquefier (24) is integrated in a case arranged above an overturnable driver's cab (4) of a truck, whereby the case is fixed by means of a quick fastener and is arranged pivotable over hydraulics (7).

## Revendications

1. Installation frigorifique de transport pour véhicules frigorifiques, comprenant au moins un condenseur
**caractérisée par**
au moins deux surfaces frontales d'une unité condenseur (24) qui sont disposées de façon angulaire l'une par rapport à l'autre.

2. Installation frigorifique de transport selon la revendication 1, **caractérisée par** une pluralité de condenseurs (24', 24") qui présentent chacun une surface frontale.

3. Installation frigorifique de transport selon l'une quelconque des revendications 1 à 2, **caractérisée par le fait que**, pour un angle α entre les surfaces frontales, vaut : 45° ≤ α ≤ 130°, ledit angle α étant de préférence compris entre 80° et 100 °.

4. Installation frigorifique de transport selon l'une quelconque des revendications 1 à 3, **caractérisée par le fait qu'**une première surface frontale (25') est disposée pour l'essentiel perpendiculairement à la direction de déplacement.

5. Installation frigorifique de transport selon l'une quelconque des revendications 1 à 4, **caractérisée par le fait qu'**une deuxième surface frontale (25") est disposée pour l'essentiel parallèlement à la direction de déplacement, ladite deuxième surface frontale étant disposée de préférence sur la face inférieure de l'installation frigorifique de transport.

6. Installation frigorifique de transport selon l'une quelconque des revendications 1 à 4, **caractérisée par le fait qu'**une deuxième surface frontale (25") est disposée pour l'essentiel parallèlement à la direction de déplacement, ladite deuxième surface frontale étant disposée de préférence sur la face supérieure de l'installation frigorifique de transport.

7. Installation frigorifique de transport selon l'une quelconque des revendications 1 à 6, **caractérisée par le fait qu'**au moins un condenseur (24) est intégré à un boîtier qui est disposé au-dessus d'une cabine de conducteur (4) d'un poids lourd, apte à être basculée, et qui est fixé au moyen de fermetures rapides et disposé à pivotement par l'intermédiaire d'une hydraulique de basculement (7).
